# EUROPÄISCHE PATENTSCHRIFT

(11) **EP 0 686 416 B1**
(45) Veröffentlichungstag und Bekanntmachung des Hinweises auf die Patenterteilung: **27.08.1997**
(21) Anmeldenummer: 95108664.4
(22) Anmeldetag: 06.06.1995
(51) Int. Cl.: B01D 25/172

(54) **Verschiebevorrichtung für Filterplatten an einer Filterpresse**
Shifting device for filter plates in a filter press
Dispositif de déplacement de plaques filtre dans une filtre-presse

(30) Priorität: 06.06.1994 DE 4419763
(43) Veröffentlichungstag der Anmeldung: 13.12.1995
(73) Patentinhaber: Erich Netzsch GmbH & Co. Holding KG, 95100 Selb (DE)
(72) Erfinder: Tröger, Gerhard, D-95030 Hof (DE)
(74) Vertreter: Goetz, Rupert, Dipl.-Ing.

(56) Entgegenhaltungen:
- EP-A- 0 453 342
- US-A- 3 232 435
- US-A- 3 306 445
- US-A- 4 197 203

## Beschreibung

Die Erfindung betrifft eine Verschiebevorrichtung nach dem Oberbegriff des Anspruchs 1.

Bei Verschiebevorrichtungen dieser Gattung, wie sie beispielsweise aus der EP 0 453 342 A1 bekannt sind, besteht das Problem, daß die Kette zwar in sich geschlossen sein muß, damit nur an einem Ende der Filterpresse eine Antriebsvorrichtung für die Kette erforderlich ist, daß aber ein Kettenschloß üblicher Art nur verwendet werden kann, wenn der Kettenkanal entsprechend breit ist, was aber den Nachteil hat, daß die Kette sich im Kettenkanal schrägstellen oder gar verkanten kann, wodurch erheblicher Verschleiß entsteht. Es ist deshalb üblich, siehe z.B. die US 33 06 455, die Kette im Bereich des Schlittens zu unterbrechen und ihre beiden Enden je für sich am Schlitten zu befestigen, was aber umständlich ist.

Der Erfindung liegt deshalb die Aufgabe zugrunde, bei einer Verschiebevorrichtung der genannten Gattung dafür zu sorgen, daß die Kette im Kettenkanal sicher geführt und dennoch für Wartungsarbeiten leicht demontierbar ist.

Die Aufgabe ist erfindungsgemäß mit den Merkmalen des Anspruchs 1 gelöst. Weiterbildungen der Erfindung ergeben sich aus den Unteransprüchen.

Ausführungsbeispiele der Erfindung werden im folgenden anhand schematischer Zeichnungen mit weiteren Einzelheiten erläutert. Es zeigen:
- Fig. 1: eine Filterpresse mit einer erfindungsgemäßen Verschiebevorrichtung in Seitenansicht,
- Fig. 2: den Teilquerschnitt II-II in Fig.1,
- Fig. 3: den Teillängsschnitt III-III in Fig.2,
- Fig. 4: einen der Fig. 2 entsprechenden Teilquerschnitt einer abgewandelten Ausführungsform der Erfindung und
- Fig. 5: den Teillängsschnitt V-V in Fig. 4.

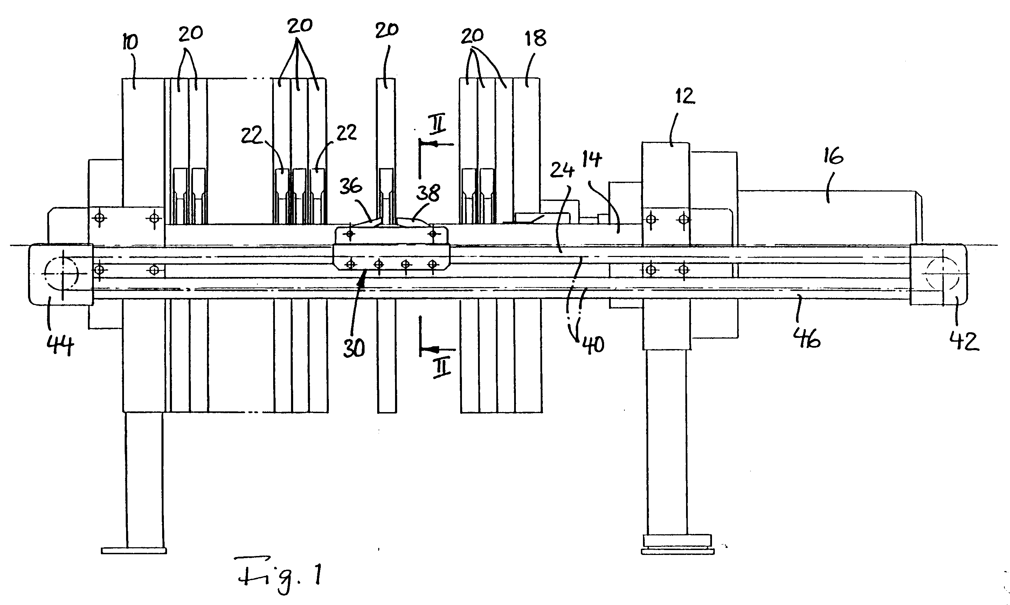

Die in Fig. 1 dargestellte Filterpresse hat eine Kopfplatte 10 und eine Endplatte 12, die in üblicher Weise paralell zueinander senkrecht angeordnet und durch ein Paar waagerechte Holme 14 miteinander verbunden sind. An der Endplatte 12 ist der Zylinder einer hydraulischen Kolbenzylindereinheit 16 befestigt. Auf den Holmen 14 ist eine zur Kopfplatte 10 und Endplatte 12 parallele Schiebeplatte 18 geführt, an der die Kolbenstange der Kolbenzylindereinheit 16 befestigt ist. Zwischen der Schiebeplatte 18 und der Kopfplatte 10 ist eine Vielzahl Filterplatten 20 angeordnet, die mit je zwei an ihnen ausgebildeten seitlichen Vorsprüngen 22 auf den Holmen 14 geführt sind.

Den beiden Holmen 14 ist je eine Verschiebevorrichtung für die Filterplatten 20 zugeordnet. Die beiden Verschiebevorrichtungen sind spiegelgleich; deshalb wird nur eine von ihnen in den Zeichnungen dargestellt und im folgenden beschrieben. Zu ihr gehört eine Führungsschiene 24, die beispielsweise aus faserverstärktem Kunststoff besteht, sich parallel zum benachbarten Holm 14 erstreckt und an dessen Außenseite befestigt ist. In der Führungsschiene 24 ist ein Kettenkanal 26 ausgebildet, der sich mit einem Längsschlitz 28 nach unten öffnet. Auf der Führungsschiene 24 ist ein Schlitten 30 geführt, der ein im dargestellten Beispiel **U**-förmiges Oberteil 32 und ein umgekehrt **L**-förmiges Unterteil 34 aufweist. Die Führungsschiene 24 sowie das Oberteil 32 des Schlittens 30 sind in bezug auf eine senkrechte, zur Längsmittelebene der Filterpresse parallele Symmetrieebene S symmetrisch gestaltet.

Am Oberteil 32 des Schlittens 30 sind zwei Mitnehmer 36 und 38 schwenkbar gelagert und derart vorgespannt, daß sie bestrebt sind, in der dargestellten Weise hinter dem über die Führungsschiene 24 hinausragenden seitlichen Vorsprung 22 einer der Filterplatten 20 einzurasten, um die betreffende Filterplatte bei einem nächsten Arbeitshub des Schlittens 30 mitzunehmen. Dies geschieht an beiden Seiten der Filterpresse in gleicher Weise durch die Schlitten 30 beider Verschiebevorrichtungen; infolgedessen bleiben die Filterplatten 20 bei ihrer Bewegung ständig parallel zur Kopfplatte 10.

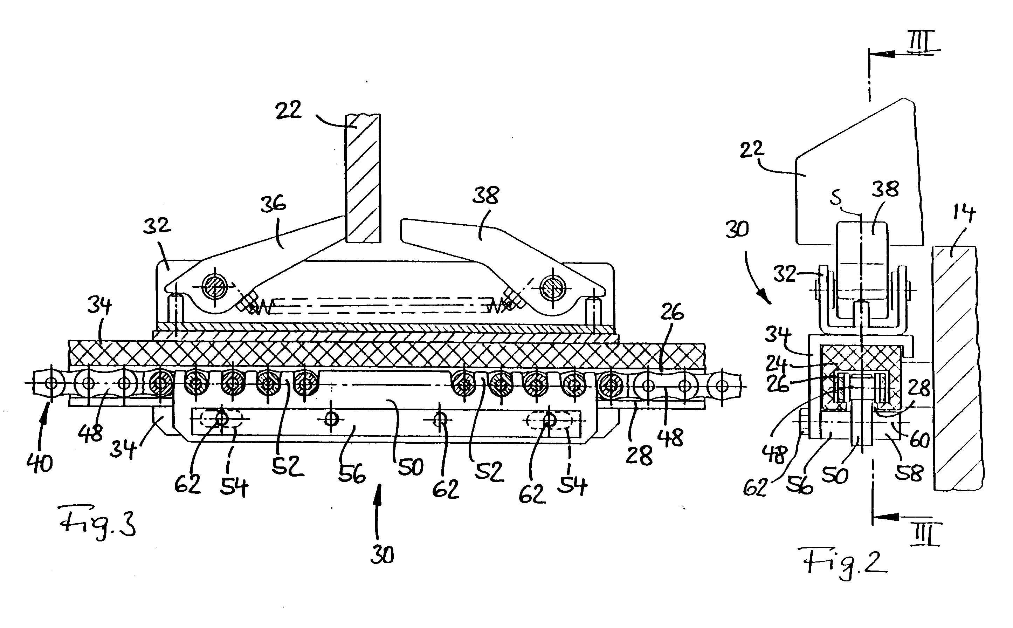

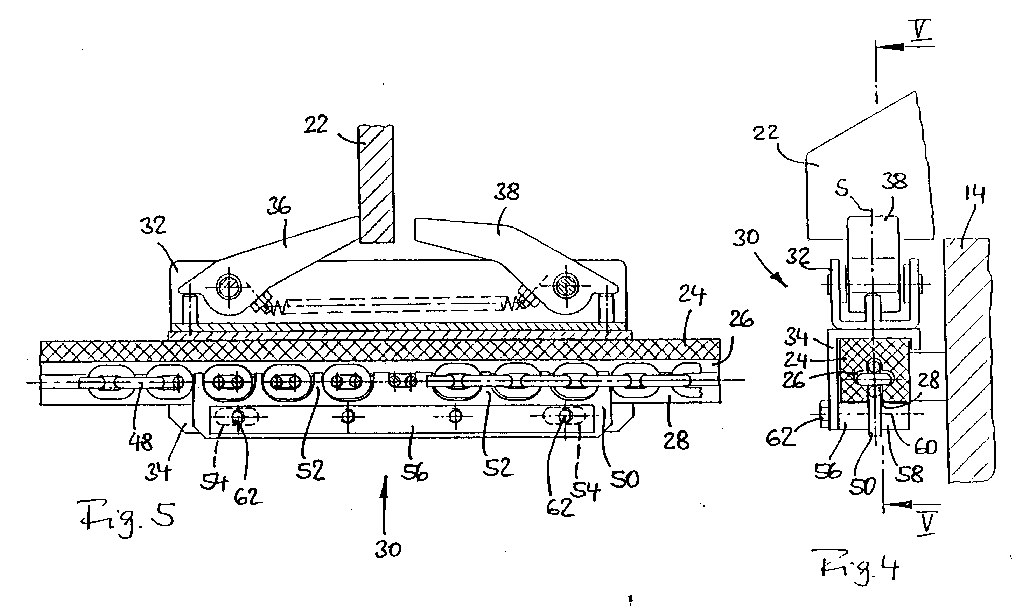

Im Kettenkanal 26 ist eine Kette 40 geführt, die gemäß Fig. 2 und 3 eine Gall'sche laschenkette, gemäß Fig. 4 und 5 hingegen eine Rundgliederkette ist. In beiden Fällen ist das Profil des Kettenkanals 26 eng an das Profil der Kette 40 angepaßt, so daß diese in der Führungsschiene 24 sicher geführt ist. Die Kette 40 ist in beiden dargestellten Ausführungsbeispielen nur mit ihrem oberen Trum in der Führungsschiene 24 geführt und läuft außerhalb von dieser über eine Antriebsvorrichtung 42 an dem in Fig. 1 rechten Ende der Filterpresse sowie über eine Umlenkvorrichtung 44 an deren linkem Ende. Das im dargestellten Beispiel untere Trum der Kette 40 ist in einem zylindrischen Schutzrohr 46 geführt, das ebenfalls aus Kunststoff bestehen kann.

Die Kette 40 hat im Bereich des Schlittens 30, im dargestellten Beispiel unterhalb von ihm, zwei Enden, die nur dadurch miteinander verbunden sind, daß die dort angeordneten Kettenglieder 48 durch eine Lasche 50 miteinander verbunden sind. Die Lasche 50 ist eine kammartige, ebene Stahlplatte mit mindestens zwei Zähnen 52, die in je ein Kettenglied 48 an den beiden Enden der Kette 40 eingreifen. Damit sich der Kettenzug besser auf die Lasche 50 verteilt, weist diese gemäß Fig. 3 und auch Fig. 5 insgesamt acht Zähne 52 auf, von denen den beiden Kettenenden je vier Zähne zugeordnet sind.

Die Lasche 50 ist am Schlitten 30 lösbar befestigt. Zu diesem Zweck weist die Lasche 50 zwei zur Längsrichtung der Kette 40 parallele Langlöcher 54 auf, durch die hindurch sie an dem Unterteil 34 des Schlittens 30 festgeschraubt ist, wobei die Lasche 50 zwischen zwei Klemmleisten 56 und 58 festgeklemmt ist. Die Klemmleiste 56 ist zwischen dem Unterteil 34 und der Lasche 50 angeordnet und in ihrer Dicke so bemessen, daß die senkrechte Längsmittelebene der Lasche 50 mit der Symmetrieebene S übereinstimmt. Die Klemmleiste 58 weist Gewindelöcher 60 für im dargestellten Beispiel insgesamt vier Klemmschrauben 62 auf, denen Durchgangslöcher im Unterteil 34 des Schlittens 30 sowie in der Klemmeleiste 56 zugeordnet sind. Für die beiden mittleren Schrauben 62 werden in der Lasche 50 Durchgangslöcher erst dann gebohrt, wenn der dargestellte Schlitten 30 in bezug auf den an der anderen Seite der Filterpresse angeordneten Schlitten justiert worden ist und diejenigen Schrauben 62, die sich durch die Langlöcher 54 erstrecken, festgezogen worden sind. Die beiden mittleren Schrauben 62 sorgen somit dafür, daß diese Justierung zuverlässig erhalten bleibt.

Die beiden Klemmleisten 56 und 58 sind zugleich Führungsleisten, die den Schlitten 30 hindern, von der Führungsschiene 24 abzuheben oder zu verkanten. Für Wartungsarbeiten lassen sich die Lasche 50 und die Klemmleisten 56 und 58 leicht demontieren, indem die Schrauben 62 entfernt werden. Anschließend läßt sich der Schlitten 30 ohne weiteres senkrecht, im dargestellten Beispiel nach oben, von der Führungsschiene 24 abziehen.

Die dargestellte Verschiebevorrichtung eignet sich auch für Filterpressen mit an einem Träger mittig aufgehängten Filterplatten. Dabei kann es zweckmäßig sein, die Verschiebevorrichtung, oder zwei davon in einer gegenüber den gezeichneten Ausführungsbeispielen umgekehrten Anordnung an dem Träger zu befestigen, also mit nach oben offenem Längsschlitz 28, durch den die Lasche 50 nach oben herausragt.

## Patentansprüche

1. Verschiebevorrichtung für Filterplatten (20) an einer Filterpresse, mit
- einer Führungsschiene (24), die sich entlang der Filterpresse erstreckt,
- einem Kettenkanal (26), der in der Führungsschiene (24) ausgebildet ist und einen nach außen offenen Längsschlitz (28) aufweist,
- einem Schlitten (30), der entlang der Führungsschiene (24) hin- und herbewegbar ist und mindestens einen Mitnehmer (36, (38) zum Angreifen an einem Vorsprung (22) einer Filterplatte (20) trägt,
- einer Kette (40), die an einander gegenüberliegenden Enden der Filterpresse über eine Antriebs- bzw. Umlenkvorrichtung (42, 44) läuft und dazwischen im Kettenkanal (26) geführt ist, und
- einer Lasche (50), die den Schlitten (30) durch den Längsschlitz (28) der Führungsschiene (24) hindurch mit der Kette (40) verbindet und deren Bewegungen auf den Schlitten (30) überträgt,
dadurch **gekennzeichnet,** daß
- die Kette (40) im Bereich des Schlittens (30) unterbrochen ist,
- die Lasche (50) beiderseits der Unterbrechung mindestens je einen Zahn (52) aufweist, der in ein Kettenglied (48) eingreift, und
- die Verbindung des Schlittens (30) mit der Lasche (50) lösbar ist.

2. Verschiebevorrichtung nach Anspruch 1,
dadurch **gekennzeichnet,** daß
die Lasche (50) in einer senkrechten Ebene (S) angeordnet ist, die zugleich Symmetrieebene der Kette (40) ist.

3. Verschiebevorrichtung nach Anspruch 1 oder 2,
dadurch **gekennzeichnet,** daß
die Lasche (50) in ihrer Längsrichtung justierbar am Schlitten (30) befestigt ist.

4. Verschiebevorrichtung nach einem der Ansprüche 1 bis 3,
dadurch **gekennzeichnet,** daß
die Lasche (50) sich annähernd über die gesamte Länge des Schlittens (30) erstreckt und auf dem überwiegenden Teil dieser Länge Zähne (52) zum Eingreifen in je ein Kettenglied (48) aufweist.

5. Verschiebevorrichtung nach einem der Ansprüche 1 bis 4,
dadurch **gekennzeichnet,** daß
der Schlitten (30) nach Lösen der Verbindung mit der Lasche 50 senkrecht zur Führungsschiene (24) von dieser abziehbar ist.

## Claims

1. A shifting means for filter plates (20) in a filter press, comprising
- a guide rail (24) extending along the filter press,
- a chain channel (26) formed in the guide rail (24) and having an outwardly open longitudinal slot (28),
- a slide (30) that is adapted to reciprocate along the guide rail (24) and carries at least one lug (36, 38) for engaging a protrusion (22) of a filter plate (20),
- a chain (40) that runs over a drive device (42) and a deflection device (44), respectively, at opposite ends of the filter press and is guided therebetween in the chain channel (26), and
- a side bar (50) connecting the slide (30) with the chain (40) through the longitudinal slot (28) in the guide rail (24) and transmitting its movements to the slide (30),
**characterized** in that
- the chain (40) is interrupted in the area of the slide (30),
- the side bar (50) is provided with at least one tooth (52) each at either side of the interruption which engages a chain link (48), and
- the connection of the slide (30) with the side bar (50) is adapted to be dissolved.

2. The shifting means according to claim 1, **characterized** in that the side bar (50) is arranged in a vertical plane (S) which at the same time is the symmetry plane of the chain (40).

3. The shifting means according to claim 1 or 2, **characterized** in that the side bar (50) is mounted on the slide (30) so as to be adjustable in its longitudinal direction.

4. The shifting means according to any one of claims 1 to 3, **characterized** in that the side bar (50) extends approximately over the entire length of the slide (30) and carries teeth (52) on the greater part of said length for engagement with a chain link (48) each.

5. The shifting means according to any one of claims 1 to 4, **characterized** in that the slide, after having been detached from the side bar (50), is adapted to be withdrawn vertically with respect to the guide rail (24) from the same.

## Revendications

1. Dispositif de translation pour plateaux filtres (20) d'un filtre-presse, comprenant,
- un rail de guidage (24) qui s'étend le long du filtre-presse
- un canal de chaîne (26) qui est formé dans le rail de guidage (24) et présente une fente longitudinale (28) ouverte vers l'extérieur,
- un chariot (30) qui peut se déplacer en va-et-vient le long du rail de guidage (24) et porte au moins un taquet d'entraînement (36, 38) destiné à attaquer un bossage (22) d'un plateau filtre (20),
- une chaîne (40) qui passe sur des dispositifs d'entraînement et de renvoi (42, 44) à des extrémités mutuellement opposées du filtre-presse et qui, entre ces dispositifs, est guidée dans le canal de chaîne (26),
- une éclisse (50) qui relie le chariot (30) à la chaîne (40) à travers la fente longitudinale (28) du rail de guidage (24), et transmet les mouvements de la chaîne au chariot (30),
caractérisé en ce que
- la chaîne (40) est interrompue dans la région du chariot (30),
- l'éclisse (50) présente, de chaque côté de l'interruption, au moins une dent (52) qui est engagée dans un maillon de chaîne (48) et
- la liaison entre le chariot (30) et l'éclisse (50) est démontable.

2. Dispositif de translation selon la revendication 1,
caractérisé en ce que
l'éclisse (50) est disposée dans un plan vertical (S) qui est en même temps le plan de symétrie de la chaîne (40).

3. Dispositif de translation selon la revendication 1 ou 2,
caractérisé en ce que
l'éclisse (50) est fixée au chariot (30) dans sa direction longitudinale.

4. Dispositif de translation selon une des revendications 1 à 3,
caractérisé en ce que
l'éclisse (50) s'étend à peu près sur toute la longueur du chariot (30) et présente, sur la majeure partie de cette longueur, des dents (52) destinées à s'engager chacune dans un maillon (48) de la chaîne.

5. Dispositif de translation selon une des revendications 1 à 4,
caractérisé en ce
qu'après le desserrage de la liaison avec l'éclisse (50), le chariot (30) peut être séparé du rail de guidage (24) par un mouvement perpendiculaire à ce rail.
